# EUROPÄISCHE PATENTANMELDUNG

(11) **EP 2 538 326 A1**
(43) Veröffentlichungstag der Anmeldung: **26.12.2012**
(21) Anmeldenummer: 11171253.5
(22) Anmeldetag: 24.06.2011
(51) Int. Cl.: G06F 9/445, G05B 19/418, H04L 29/08

(54) **Computerimplementiertes Verfahren zur Änderung einer Konfiguration eines ausführbaren Computerprogramms in Abhängigkeit von dem Ort**

(71) Anmelder: SIEMENS AKTIENGESELLSCHAFT, 80333 München (DE)
(72) Erfinder: Mehrmann, Lars, 90579 Langenzenn (DE)

(57) **Zusammenfassung**

Computerimplementiertes Verfahren zur Änderung einer Konfiguration eines ausführbaren Computerprogramms

Die Erfindung betrifft ein computerimplementiertes Verfahren zur Änderung einer Konfiguration eines ersten ausführbaren Computerprogramms, wobei das Verfahren die folgenden Schritte umfasst:
- Bestimmung (S1) eines Ortes, an dem das erste Computerprogramm ausgeführt wird;
- Bestimmung (S2) einer Region, in der der Ort liegt;
- Bestimmung (S3) eines Funktionsumfang, der für das erste Computerprogramm an dem Ort zulässig ist;
- Änderung (S4) der Konfiguration des ersten Computerprogramms, wobei nach der Änderung der Konfiguration das erste Computerprogramm den bestimmten Funktionsumfang umfasst.

## Beschreibung

Die Erfindung betrifft ein computerimplementiertes Verfahren zur Änderung einer Konfiguration eines ausführbaren Computerprogrammes, insbesondere die Änderung der Konfiguration des Computerprogrammes in Abhängigkeit des Ortes, in dem das Computerprogramm ausgeführt wird.

Im Stand der Technik werden verschiedene Versionen eines Computerprogrammes mit unterschiedlichem Funktionsumfang ausgeliefert, wenn für verschiedene Orte verschiedene Funktionsumfänge gewünscht werden. Dies kann beispielsweise der Fall sein, wenn in bestimmten Regionen oder Ländern das Programm nur mit einem reduzierten Funktionsumfang angeboten werden soll.

Demgegenüber liegt der Erfindung die Aufgabe zugrunde, ein verbessertes computerimplementiertes Verfahren, einen verbesserten Computer und ein verbessertes Computerprogrammprodukt zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen angegeben.

Die Erfindung betrifft ein computerimplementiertes Verfahren zur Änderung von einer Konfiguration eines ersten ausführbaren Computerprogramms. Zunächst wird ein Ort bestimmt, an dem das erste Computerprogramm ausgeführt wird. Dies kann beispielsweise dadurch geschehen, dass ein Sensor Ortsdaten misst. Der Sensor kann beispielsweise einen Empfänger für Satelliten-Navigationsdaten, ein Mobilfunkempfänger oder ein Empfänger für ein Zeitsignal, das über einen Funkübertragung übertragen wird, sein. Dementsprechend können die Ortsdaten Satelliten-Navigationsdaten, ein Identifikator des Mobilfunknetzes oder einer Zelle des Mobilfunknetzes oder per Funkt übertragene Zeitdaten sein. Die per Funkt übertragenen Zeitdaten können beispielsweise von einem Sender zur Synchronisierung von Funkuhren stammen, der ein Zeitsignal per Funk ausstrahlt. Außerdem kann der Sensor ein Netzwerkadapter sein, das eine IP-Adresse des Computers ermittelt, der das erste Computerprogramm ausführt. Die IP-Adresse kann auch zur Bestimmung des Ortes verwendet werden. Beispielsweise werden bestimmte IP-Adressen nur in bestimmten Ländern oder Regionen vergeben. Auch eine genauere Bestimmung als nur die des Landes oder der Region mittels der IP-Adresse ist ebenso möglich

Falls ein Mobilfunkempfänger als Sensor für die Ortsdaten verwendet wird, können die Ortsdaten beispielsweise ein Identifikator für das Mobilfunknetz sein. In diesem Falle lässt sich anhand des Mobilfunknetzes auch der Ort des Computers, der das erste Computerprogramm ausführt, ermitteln. Beispielsweise wird als Ort Deutschland ermittelt, wenn das Mobilfunknetz ein deutsches Mobilfunknetz ist.

Die Satelliten-Navigationsdaten können beispielsweise durch einen Satelliten-Navigationsdaten-Empfänger empfangen werden. Die Satelliten-Navigationsdaten spezifizieren einen Ort, an dem sich der Computer befindet, der das erste Computerprogramm ausführt. Die Verwendung des per Funkt übertragenen Zeitsignals an einen Empfänger für das Zeitsignal als Ortsdaten kann beispielsweise so realisiert werden, dass als Ort die Region oder das Land bestimmt wird, für das das empfangene Zeitsignal gültig ist. Beispielsweise wird als Ort Deutschland bestimmt, wenn das deutsche Zeitsignal empfangen wird. Es ist auch denkbar, dass ein europäisches Zeitsignal empfangen wird und als Ort Europa bestimmt wird. Der Ort kann also ein spezifizierter Ort sein oder aber ein Land oder eine Region. Es ist auch möglich, dass als Ort lediglich ein Teil eines Landes bestimmt wird. Dies kann insbesondere in großen Ländern wie beispielsweise Kanada, Russland oder USA vorteilhaft sein.

Die Bestimmung des Ortes kann dafür benutzt werden, den Funktionsumfang des ersten Computerprogrammes zu bestimmen. Beispielsweise können für bestimmte Regionen oder Länder nur bestimmte Funktionen freigeschaltet werden. Somit können beispielsweise länderspezifische oder regionalspezifische Ausführungsformen des ersten Computerprogrammes leicht aus einer Ursprungskonfiguration des ersten Computerprogrammes erzeugt werden. Beispielsweise lassen sich so Ausführungsformen des Programmes in der Landessprache erzeugen oder aber Ausführungsformen für bestimmte Regionen wie beispielsweise besonders heiße oder kalte Regionen. Dies kann insbesondere im Falle von Automatisierungskomponenten vorteilhaft sein, da die Automatisierungskomponenten andere Anforderungen unter heißen als unter kalten Bedingungen haben können.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen. Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Die Bestimmung der Konfiguration des ersten Computerprogrammes kann vorteilhaft sein, um beispielsweise exportrechtlichen Gesetzen oder Vorschriften zu genügen. Beispielsweise kann die Aktivierung bestimmter Funktionen des ersten Computerprogrammes in bestimmten Ländern nicht erlaubt sein. In diesem Falle kann die Konfiguration für dieses Land so gestaltet sein, dass die entsprechende Funktion dort nicht verfügbar ist. In anderen Ländern kann diese Funktion jedoch verfügbar sein.

Nach der Bestimmung des Ortes, an dem das erste Computerprogramm ausgeführt wird, wird eine Region bestimmt, in der der Ort liegt. Anschließend wird ein Funktionsumfang bestimmt, der für das erste Computerprogramm an dem Ort zulässig ist. Die Zulässigkeit kann beispielsweise davon abhängen, welche Sprache in der Region gesprochen wird oder welche klimatischen Bedingungen in der Region vorliegen. Der Funktionsumfang kann auch berücksichtigen, dass beispielsweise einige Funktionen in der Region aus exportrechtlichen Gründen nicht aktiviert werden dürfen.

Anschließend wird die Konfiguration des ersten Computerprogramms geändert. Nach der Änderung der Konfiguration umfasst das erste Computerprogramm den bestimmten Funktionsumfang.

Nach Ausführungsformen der Erfindung wird der Ort dadurch bestimmt, dass ein Sensor Ortsdaten misst. Die Ortsdaten spezifizieren dabei den Ort. Die Bestimmung der Region und/oder die Bestimmung des Funktionsumfangs wird dabei durch eine Bestimmungskomponente durchgeführt. Die Ortsdaten werden von dem Sensor verschlüsselt an die Bestimmungskomponente übertragen.

Nach Ausführungsformen der Erfindung erfolgen die Bestimmung der Region, die Bestimmung des Funktionsumfanges und die Änderung der Konfiguration durch ein zweites Computerprogramm. Das zweite Computerprogramm kann unabhängig von dem ersten Computerprogramm aktualisiert werden. Beispielsweise kann es sich bei dem zweiten Computerprogramm um eine Firmware des Computers handeln, der das erste Computerprogramm ausführt. Das erste Computerprogramm kann dabei beispielsweise ein ausführbares Computerprogramm sein, das durch ein Betriebssystem des Computers ausgeführt wird. Dadurch, dass das zweite Computerprogramm unabhängig von dem ersten Computerprogramm ausgeführt werden kann, ist es möglich, durch eine Aktualisierung des zweiten Computerprogrammes den Funktionsumfang des ersten Computerprogrammes zu aktualisieren. Mit anderen Worten kann der Funktionsumfang des ersten Computerprogrammes durch eine Aktualisierung des zweiten Computerprogrammes eingeschränkt oder erweitert werden. Dies kann vorteilhaft sein, wenn beispielsweise bestimmte Funktionen, die vorher an dem Ort nicht zulässig waren, nun zulässig sein sollen. Beispielsweise kann dies der Fall sein, wenn der Nutzer weitere Funktionen eingekauft hat oder aber wenn sich die rechtliche Lage hinsichtlich der Funktionen geändert hat. Es kann auch wünschenswert sein, den Funktionsumfang des ersten Computerprogrammes zu ändern, wenn in der Automatisierungsanlage, in der sich der Computer beispielsweise als Automatisierungskomponente befindet, Veränderungen durchgeführt wurden.

Beispielsweise kann das zweite Computerprogramm nicht so leicht wie das erste Computerprogramm durch einen Benutzer manipuliert werden, wodurch der Benutzer beispielsweise weitere Funktionen freischalten möchte, die an diesem Ort allerdings nicht freigeschaltet werden sollen. Dies kann beispielsweise aus Sicherheitsgründen oder anderen Erwägungen sinnvoll sein. Beispielsweise könnte ein Benutzer Funktionen freischalten wollen, die aufgrund der klimatischen Verhältnisse an dem Ort aus Sicherheitsgründen nicht freigeschaltet werden sollen. So etwas wird dadurch verhindert, dass der Funktionsumfang des ersten Computerprogrammes durch das zweite Computerprogramm bestimmt wird und dass das zweite Computerprogramm verschlüsselt unabhängig von dem ersten Computerprogramm aktualisiert werden kann.

Nach Ausführungsformen der Erfindung wird über eine Datenverbindung überprüft, ob das zweite Computerprogramm aktualisiert werden soll. Eine Aktualisierung des zweiten Computerprogrammes über die Datenverbindung erfolgt, wenn das zweite Computerprogramm aktualisiert werden soll. Der Computer, der das erste Computerprogramm ausführt, umfasst beispielsweise dafür eine Uhr, die einen Zeitpunkt bestimmt, an dem das zweite Computerprogramm aktualisiert werden soll. Dies kann beispielsweise ein regelmäßiges Intervall von einigen Stunden, einigen Tagen, einigen Wochen oder einigen Monaten sein oder aber auch eine absolute Zeit, wie ein konkretes Datum oder eine konkrete Uhrzeit. Die regelmäßige Aktualisierung des zweiten Computerprogrammes stellt sicher, dass der Funktionsumfang des ersten Computerprogrammes regelmäßig überprüft und geändert werden kann.

Nach Ausführungsformen der Erfindung erfolgt die Aktualisierung des zweiten Computerprogrammes verschlüsselt.

Nach Ausführungsformen der Erfindung findet die Überprüfung, ob das zweite Computerprogramm aktualisiert werden soll, nach einem ersten Zeitintervall statt. Nach einem zweiten Zeitintervall wird überprüft, ob die Datenverbindung besteht. Das zweite Zeitintervall ist dabei kleiner als das erste Zeitintervall. Über Darstellungsmittel wird dann nach Ablauf des zweiten Zeitintervalls dem Nutzer eine Aufforderung dargestellt, dass die Datenverbindung hergestellt werden soll, wenn die Datenverbindung nicht besteht. Solch ein Verfahren ist beispielsweise vorteilhaft, wenn der Computer, der das erste Computerprogramm ausführt, nicht dauerhaft über eine Datenverbindung, wie beispielsweise eine Internetverbindung, verfügt. Dies kann beispielsweise bei Automatisierungskomponenten sein, die an ihrem normalen Einsatzort keine Datenverbindungen mit externen Geräten aufbauen können. Wenn in diesem Falle dem Benutzer eine Aufforderung zur Herstellung der Datenverbindung angezeigt wird, kann er dafür sorgen, dass die Datenverbindung hergestellt wird. Sobald die Datenverbindung besteht, kann das zweite Computerprogramm aktualisiert werden. Nach erfolgreicher Aktualisierung kann dem Benutzer beispielsweise auch dargestellt werden, dass die Aktualisierung des zweiten Computerprogrammes erfolgt ist und die Datenverbindung wieder getrennt werden kann.

Nach Ausführungsformen der Erfindung wird ein erster beschränkter Funktionsumfang bestimmt, wenn die Datenverbindung nach dem ersten Zeitintervall nicht besteht. Der erste beschränkte Funktionsumfang umfasst dabei weniger Funktionen als der Funktionsumfang. Wenn also der Benutzer im Zeitraum zwischen dem Ende des zweiten Zeitintervalls und dem Ende des ersten Zeitintervalls keine Datenverbindung herstellt, wird der Funktionsumfang des ersten Computerprogrammes eingeschränkt. Es könnte beispielsweise möglich sein, dass bestimmte Funktionen, die ursprünglich zulässig waren, nun nach Ablauf des ersten Zeitintervalles nicht mehr zulässig sind. Da dies aufgrund der fehlenden Datenverbindung nicht nachvollzogen werden kann, wird ein beschränkter Funktionsumfang bestimmt, der für alle Ort zulässig ist.

Nach Ausführungsformen der Erfindung sind die Darstellungsmittel und ein Prozessor Bestandteile eines Computers, wobei der Prozessor das erste und das zweite Computerprogramm ausführt.

Nach Ausführungsformen der Erfindung wird der Ort durch einen Empfänger für Satelliten-Navigationsdaten, einen Empfänger für Mobilfunkdaten, einen Empfänger für Zeitsignaldaten und/oder mittels einer Adresse der Datenverbindung bestimmt.

Nach Ausführungsformen der Erfindung ermittelt ein Geschwindigkeitssensor eine Geschwindigkeit des Computerprogramms, der das erste Computerprogramm ausführt. Die Geschwindigkeit wird zur Bestimmung des Funktionsumfanges verwendet. Beispielsweise kann es möglich sein, dass das erste Computerprogramm in einem Fahrzeug ausgeführt wird, obwohl die Automatisierungskomponenten des an den Computer angeschlossenen Automatisierungsnetzwerkes nicht für den Betrieb in einem Fahrzeug ausgelegt sind. Der Betrieb im Fahrzeug wird bei Bewegen des Fahrzeuges durch den Geschwindigkeitssensor detektiert und bestimmte Funktionen, die für den Betrieb in einem Fahrzeug nicht zulässig sind, werden deaktiviert. Die Deaktivierung bestimmter Funktionen kann beispielsweise aus Sicherheitsgründen nötig sein. Beispielsweise sind bestimmte Komponenten nicht für die Erschütterungen und Beschleunigungen, die in einem Fahrzeug auftreten können, ausgelegt.

Nach Ausführungsformen der Erfindung wird ein zweiter beschränkter Funktionsumfang bestimmt, wenn eine Bestimmung des Ortes nicht möglich ist. Dies kann beispielsweise der Fall sein, wenn die Verbindung des Empfängers zum Computer, der das erste Computerprogramm ausführt, getrennt wird. Der zweite beschränkte Funktionsumfang umfasst weniger Funktionen als der Funktionsumfang. Wenn der Empfänger nicht an den Computer angeschlossen ist, kann der Ort nicht bestimmt werden. Somit lässt sich nicht bestimmen, welcher Funktionsumfang an dem Ort zulässig ist. In diesem Falle wird der kleinstmögliche Funktionsumfang, der an allen Orten zulässig ist, bestimmt.

Nach Ausführungsformen der Erfindung wird das erste Computerprogramm durch ein Sicherheitsmodul ausgeführt. Das Sicherheitsmodul kann dabei zum Beispiel Bestandteil des Computers sein. Das Sicherheitsmodul ist gegen Manipulationen gesichert. Beispielsweise kann das Sicherheitsmodul ein sogenanntes Temporal Resistant Module sein. Eine Manipulation an dem Sicherheitsmodul ist in diesem Falle nur durch Zerstörung des Sicherheitsmodules möglich.

Nach Ausführungsformen der Erfindung ist das Sicherheitsmodul mit der Hauptplatine des Computers unlösbar verbunden. In diesem Falle wäre eine Manipulation des Sicherheitsmoduls nur durch Zerstörung der Hauptplatine des Computers möglich. Dies erschwert Manipulationen.

In einem weiteren Aspekt betrifft die Erfindung einen Computer mit Mitteln zur Bestimmung eines Ortes, an dem ein erstes Computerprogramm ausgeführt wird. Das erste Computerprogramm kann auch durch den Computer ausgeführt werden. Außerdem umfasst der Computer Mittel zur Bestimmung einer Region, in der der Ort liegt. Ferner umfasst der Computer Mittel zur Bestimmung eines Funktionsumfanges, der für das erste Computerprogramm an dem Ort zulässig ist. Schließlich umfasst der Computer noch Mittel zur Änderung der Konfiguration des ersten Computerprogrammes. Nach der Änderung der Konfiguration des ersten Computerprogrammes umfasst das erste Computerprogramm den bestimmten Funktionsumfang. Ausführungsformen des Computers sind zur Ausführung von computerimplementierten Verfahren nach Ausführungsformen der Erfindung ausgebildet.

In noch einem weiteren Aspekt betrifft die Erfindung ein Computerprogrammprodukt mit durch einen Prozessor ausführbaren Instruktionen, wobei die Instruktionen einen Computer bei Ausführung zur Durchführung eines Verfahrens nach Ausführungsformen der Erfindung veranlassen.

Nachfolgend werden Ausführungsformen der Erfindung anhand der Figuren näher erläutert. Es zeigen:
- Figur 1: ein Blockdiagramm eines Computers nach Ausführungsformen der Erfindung und
- Figur 2: ein Flussdiagramm eines Verfahrens nach Ausführungsformen der Erfindung.

Elemente der nachfolgenden Figuren werden mit denselben Bezugszeichen gekennzeichnet, wenn die Funktion des Elementes identisch ist.

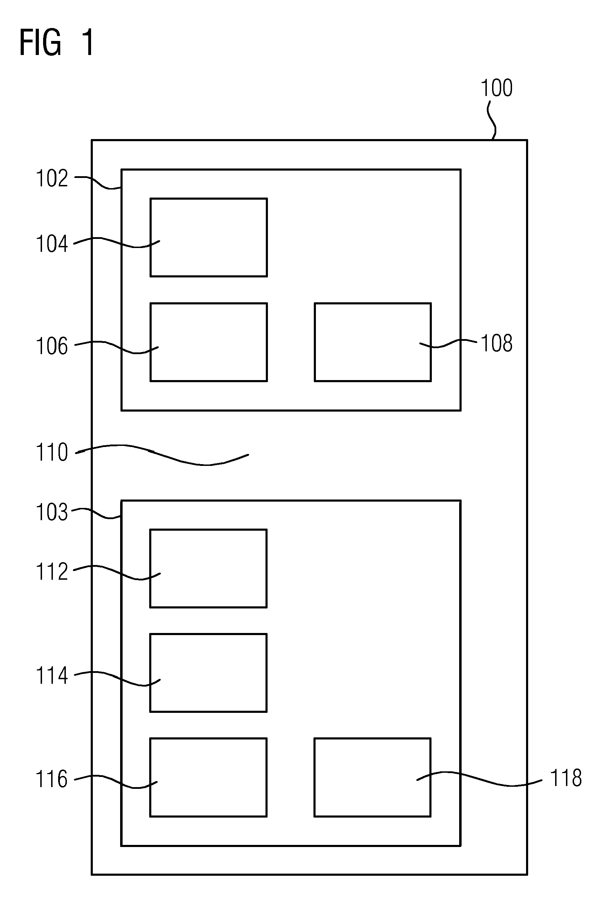

Figur 1 ist ein Blockdiagramm eines Computers 100. Der Computer 100 führt ein erstes Computerprogramm aus. Der Computer umfasst ein erstes Modul 102 und ein zweites Modul 103 Das erste Modul 102 umfasst einen Sensor 104, der Sensordaten misst. Die Sensordaten sind Ortsdaten, die einen Ort spezifizieren. Der Sensor 104 kann beispielsweise ein Sensor für Satelliten-Navigationsdaten, ein Mobilfunkempfänger oder ein Empfänger für ein Zeitsignal sein. Die Satelliten-Navigationsdaten bezeichnen beispielsweise den genauen Ort des Computers 100. Die Mobilfunknetzdaten können einen ungefähren Ort des Computers 100 angeben. Beispielsweise kann dies durch einen Identifikator der Zelle des Mobilfunknetzes oder des Mobilfunknetzes im Allgemeinen geschehen. Falls der Sensor 104 ein Zeitsignalsensor ist, so kann eine Ortsbestimmung dadurch erfolgen, dass der Ort des Computers 100 innerhalb des Empfangsbereiches für das Zeitsignal liegt, wenn das Zeitsignal empfangen wird. Wenn das Zeitsignal nicht empfangen wird, wird als Ort bestimmt, dass der Ort außerhalb des Empfangsbereich des Zeitsignals liegt. So kann beispielsweise im Falle eines europäischen Zeitsignals festgestellt werden, ob der Ort in Europa liegt oder nicht.

Ferner umfasst das erste Modul 102 eine Sicherheitskomponente 106. Die Sicherheitskomponente 106 signiert die Sensordaten, bevor diese über eine sichere Datenverbindung 110 an das zweite Modul 103 übertragen werden. Außerdem kann die Sicherheitskomponente die Sensordaten mittels eines Schlüssels 108 verschlüsseln.

Das zweite Modul 103 umfasst eine weitere Sicherheitskomponente 112, die die Signatur der Ortsdaten prüft und gegebenenfalls entschlüsselt. Durch die sichere Übertragung der Ortsdaten wird eine Manipulation der Ortsdaten verhindert.

Ferner umfasst das zweite Modul 103 eine Komponente zur Bestimmung der Region 114. Die Komponente 114 zur Bestimmung der Region umfasst beispielsweise eine Tabelle sein, die bestimmten Orten bestimmte Regionen zuweist. Die Region kann dabei ein Teil eines Landes, ein Land oder eine Region bestehend aus mehreren Ländern sein. Wenn beispielsweise die Ortsdaten einen Ort und Koordinaten wie dem Breiten- und Längengrad angeben, kann die Region ein Land sein oder aber auch eine Region wie die europäische Union. Die Ortsdaten kann auch eine IP-Adresse des Anschlusses des Computers 100 an das Internet sein. In diesem Fall lässt sich der Ort durch die IP-Adresse zumindest ungefähr bestimmen. Auch hier ist eine Bestimmung der Region durch die Komponente 114 möglich. Die Komponente 114 ist außerdem dazu ausgebildet, eventuelle Daten eines Beschleunigungssensors (nicht dargestellt in Figur 1) des Computers auszuwerten. Beispielsweise können bestimmte Funktionen des ersten Computerprogrammes deaktiviert werden, wenn der Computer 100 beschleunigt oder bewegt wird.

Außerdem umfasst das zweite Modul 103 eine Komponente 116 zur Bestimmung des Funktionsumfangs des ersten Computerprogramms. Beispielsweise können bestimmte Funktionen nur in bestimmten Regionen oder Ländern verfügbar sein. So kann das erste Computerprogramm auf länderspezifische Bedürfnisse abgestimmt werden. Beispielsweise kann das Computerprogramm in der Landessprache zur Verfügung gestellt werden. Es ist auch möglich, die Funktionen des Computerprogrammes an die klimatischen Gegebenheiten des Ortes, der durch den Sensor 104 festgestellt wurde, anzupassen. Die Komponente 116 bestimmt den Funktionsumfang in Abhängigkeit der von der Komponente 114 bestimmten Region. Außerdem wird der Funktionsumfang durch die Komponente 116 in Abhängigkeit davon festgestellt, ob die Komponente 114 eine Bewegung oder Beschleunigung des Computers 100 bestimmt hat.

Ferner umfasst das zweite Modul 103 eine Komponente 118 zur Änderung der Konfiguration des ersten Computerprogrammes. Die Komponenten 116 und 118 können durch ein zweites Computerprogramm implementiert sein, dass durch den Computer 100 ausgeführt wird, z.B. die Firmware. Das zweite Computerprogramm kann durch einen in Figur 1 nicht dargestellten Server getrennt von dem ersten Computerprogramm aktualisiert werden. Durch die Aktualisierung kann beispielsweise für den Ort ein anderer Funktionsumfang definiert werden, der dann nach der Aktualisierung für das erste Computerprogramm wirksam wird.

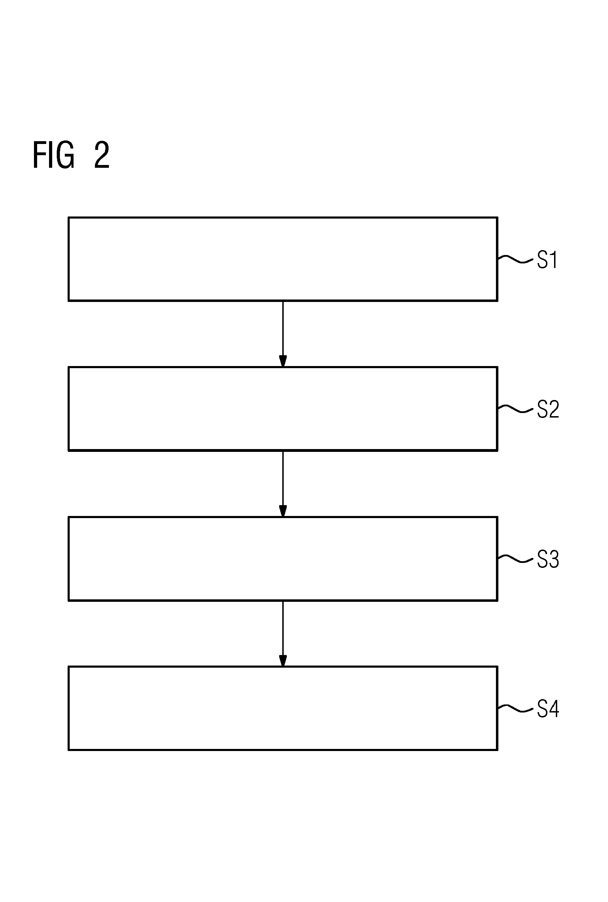

Figur 2 ist ein Flussdiagramm eines Verfahrens nach Ausführungsformen der Erfindung. In Schritt S1 wird ein Ort bestimmt, an dem das erste Computerprogramm ausgeführt wird. Dies kann beispielsweise durch den Sensor 104 aus Figur 1 geschehen. Anschließend wird in Schritt S2 eine Region bestimmt, in der der Ort liegt. Dies kann beispielsweise durch Komponente 114 aus Figur 1 geschehen. In Schritt S3 wird ein Funktionsumfang bestimmt, der für das erste Computerprogramm an dem Ort zulässig ist. Dies kann beispielsweise durch Komponente 116 aus Figur 1 geschehen. In Schritt S4 wird die Konfiguration des ersten Computerprogrammes geändert. Dies kann beispielsweise durch ein zweites Computerprogramm oder durch die Komponente 118 aus Figur 1 geschehen. Nach der Änderung der Konfiguration des ersten Computerprogrammes umfasst das erste Computerprogramm den bestimmten Funktionsumfang.

## Patentansprüche

1. Computerimplementiertes Verfahren zur Änderung einer Konfiguration eines ersten ausführbaren Computerprogramms, wobei das Verfahren die folgenden Schritte umfasst:
- Bestimmung (S1) eines Ortes, an dem das erste Computerprogramm ausgeführt wird;
- Bestimmung (S2) einer Region, in der der Ort liegt;
- Bestimmung (S3) eines Funktionsumfang, der für das erste Computerprogramm an dem Ort zulässig ist;
- Änderung (S4) der Konfiguration des ersten Computerprogramms, wobei nach der Änderung der Konfiguration das erste Computerprogramm den bestimmten Funktionsumfang umfasst.

2. Computerimplementiertes Verfahren nach Anspruch 1, wobei der Ort dadurch bestimmt wird, dass ein Sensor (104) Ortsdaten misst, wobei die Ortsdaten den Ort spezifizieren, wobei die Bestimmung der Region und/oder die Bestimmung des Funktionsumfangs durch eine Bestimmungskomponente (114) durchgeführt wird, und wobei die Ortsdaten von dem Sensor (104) verschlüsselt (110) an die Bestimmungskomponente (114) übertragen werden.

3. Computerimplementiertes Verfahren nach einem der vorhergehenden Ansprüche, wobei die Bestimmung der Region, die Bestimmung des Funktionsumfangs und die Änderung der Konfiguration durch ein zweites Computerprogramm durchgeführt werden, und wobei das zweite Computerprogramm unabhängig von dem ersten Computerprogramm aktualisiert werden kann.

4. Computerimplementiertes Verfahren nach Anspruch 3, wobei über eine Datenverbindung überprüft wird, ob das zweite Computerprogramm aktualisiert werden soll, wobei eine Aktualisierung des zweiten Computerprogramms über die Datenverbindung erfolgt, wenn das zweite Computerprogramm aktualisiert werden soll.

5. Computerimplementiertes Verfahren nach Anspruch 4, wobei die Aktualisierung verschlüsselt erfolgt.

6. Computerimplementiertes Verfahren nach einem der Ansprüche 3-5, wobei die Überprüfung, ob das zweite Computerprogramm aktualisiert werden soll, nach einem ersten Zeitintervall stattfindet, und wobei nach einem zweiten Zeitintervall überprüft wird, ob die Datenverbindung besteht, wobei das zweite Zeitintervall kleiner als das erste Zeitintervall ist, und wobei über Darstellungsmittel eine Aufforderung zur Herstellung der Datenverbindung dargestellt wird, wenn die Datenverbindung nach dem zweiten Zeitintervall nicht besteht.

7. Computerimplementiertes Verfahren nach Anspruch 6, wobei ein erster beschränkter Funktionsumfang bestimmt wird, wenn die Datenverbindung nach dem ersten Zeitintervall nicht besteht, und wobei der erste beschränkte Funktionsumfang weniger Funktionen umfasst als der Funktionsumfang.

8. Computerimplementiertes Verfahren nach einem der Ansprüche 6 oder 7, wobei die Darstellungsmittel und ein Prozessor Bestandteile eines Computers sind, wobei der Prozessor das erste und das zweite Computerprogramm ausführt.

9. Computerimplementiertes Verfahren nach einem der Ansprüche 6 oder 7, wobei der Ort durch einen Empfänger für Satellitennavigationsdaten, einen Empfänger für Mobilfunkdaten, einen Empfänger für Zeitsignaldaten und/oder mittels einer Adresse der Datenverbindung bestimmt wird.

10. Computerimplementiertes Verfahren nach einem der vorhergehenden Ansprüche, wobei ein Geschwindigkeitssensor eine Geschwindigkeit ermittelt, und wobei die Geschwindigkeit zur Bestimmung des Funktionsumfangs verwendet wird.

11. Computerimplementiertes Verfahren nach einem der vorhergehenden Ansprüche, wobei ein zweiter beschränkter Funktionsumfang bestimmt wird, wenn eine Bestimmung des Orts nicht möglich ist, wobei der zweite beschränkte Funktionsumfang weniger Funktionen als der Funktionsumfang umfasst.

12. Computerimplementiertes Verfahren nach einem der vorhergehenden Ansprüche, wobei das erste Computerprogramm durch ein Sicherheitsmodul ausgeführt wird, wobei das Sicherheitsmodul gegen Manipulationen gesichert ist.

13. Computerimplementiertes Verfahren nach Anspruch 12, wobei das Sicherheitsmodul mit der Hauptplatine des Computers unlösbar verbunden ist.

14. Computer (102) mit
- Mitteln (104) zur Bestimmung eines Ortes, an dem ein erstes Computerprogramm ausgeführt wird;
- Mitteln (114) zur Bestimmung einer Region, in der der Ort liegt;
- Mitteln (116) zur Bestimmung eines Funktionsumfang, der für das erste Computerprogramm an dem Ort zulässig ist;
- Mitteln (118) zur Änderung der Konfiguration des ersten Computerprogramms, wobei nach der Änderung der Konfiguration das erste Computerprogramm den bestimmten Funktionsumfang umfasst.

15. Computerprogrammprodukt mit durch einen Prozessor ausführbaren Instruktionen, wobei die Instruktionen einen Computer bei Ausführung zur Durchführung eines Verfahrens nach einem der Ansprüche 1-13 veranlassen.

## Geänderte Patentansprüche

### Geänderte Patentansprüche gemäss Regel 137(2) EPÜ.

**1.** Computerimplementiertes Verfahren zur Änderung einer Konfiguration eines ersten ausführbaren Computerprogramms, wobei das Verfahren die folgenden Schritte umfasst:
- Bestimmung (S1) eines Ortes, an dem das erste Computerprogramm ausgeführt wird;
- Bestimmung (S2) einer Region, in der der Ort liegt;
- Bestimmung (S3) eines Funktionsumfang, der für das erste Computerprogramm an dem Ort zulässig ist;
- Änderung (S4) der Konfiguration des ersten Computerprogramms, wobei nach der Änderung der Konfiguration das erste Computerprogramm den bestimmten Funktionsumfang umfasst,
wobei der Ort dadurch bestimmt wird, dass ein Sensor (104) Ortsdaten misst, wobei die Ortsdaten den Ort spezifizieren, wobei die Bestimmung der Region und/oder die Bestimmung des Funktionsumfangs durch eine Bestimmungskomponente (114) durchgeführt wird, und wobei die Ortsdaten von dem Sensor (104) verschlüsselt (110) an die Bestimmungskomponente (114) übertragen werden.

**2.** Computerimplementiertes Verfahren nach einem der vorhergehenden Ansprüche, wobei die Bestimmung der Region, die Bestimmung des Funktionsumfangs und die Änderung der Konfiguration durch ein zweites Computerprogramm durchgeführt werden, und wobei das zweite Computerprogramm unabhängig von dem ersten Computerprogramm aktualisiert werden kann.

**3.** Computerimplementiertes Verfahren nach Anspruch 2, wobei über eine Datenverbindung überprüft wird, ob das zweite Computerprogramm aktualisiert werden soll, wobei eine Aktualisierung des zweiten Computerprogramms über die Datenverbindung erfolgt, wenn das zweite Computerprogramm aktualisiert werden soll.

**4.** Computerimplementiertes Verfahren nach Anspruch 3, wobei die Aktualisierung verschlüsselt erfolgt.

**5.** Computerimplementiertes Verfahren nach einem der Ansprüche 2-4, wobei die Überprüfung, ob das zweite Computerprogramm aktualisiert werden soll, nach einem ersten Zeitintervall stattfindet, und wobei nach einem zweiten Zeitintervall überprüft wird, ob die Datenverbindung besteht, wobei das zweite Zeitintervall kleiner als das erste Zeitintervall ist, und wobei über Darstellungsmittel eine Aufforderung zur Herstellung der Datenverbindung dargestellt wird, wenn die Datenverbindung nach dem zweiten Zeitintervall nicht besteht.

**6.** Computerimplementiertes Verfahren nach Anspruch 5, wobei ein erster beschränkter Funktionsumfang bestimmt wird, wenn die Datenverbindung nach dem ersten Zeitintervall nicht besteht, und wobei der erste beschränkte Funktionsumfang weniger Funktionen umfasst als der Funktionsumfang.

**7.** Computerimplementiertes Verfahren nach einem der Ansprüche 5 oder 6, wobei die Darstellungsmittel und ein Prozessor Bestandteile eines Computers sind, wobei der Prozessor das erste und das zweite Computerprogramm ausführt.

**8.** Computerimplementiertes Verfahren nach einem der Ansprüche 5 oder 6, wobei der Ort durch einen Empfänger für Satellitennavigationsdaten, einen Empfänger für Mobilfunkdaten, einen Empfänger für Zeitsignaldaten und/oder mittels einer Adresse der Datenverbindung bestimmt wird.

**9.** Computerimplementiertes Verfahren nach einem der vorhergehenden Ansprüche, wobei ein Geschwindigkeitssensor eine Geschwindigkeit ermittelt, und wobei die Geschwindigkeit zur Bestimmung des Funktionsumfangs verwendet wird.

**10.** Computerimplementiertes Verfahren nach einem der vorhergehenden Ansprüche, wobei ein zweiter beschränkter Funktionsumfang bestimmt wird, wenn eine Bestimmung des Orts nicht möglich ist, wobei der zweite beschränkte Funktionsumfang weniger Funktionen als der Funktionsumfang umfasst.

**11.** Computerimplementiertes Verfahren nach einem der vorhergehenden Ansprüche, wobei das erste Computerprogramm durch ein Sicherheitsmodul ausgeführt wird, wobei das Sicherheitsmodul gegen Manipulationen gesichert ist.

**12.** Computerimplementiertes Verfahren nach Anspruch 11, wobei das Sicherheitsmodul mit der Hauptplatine des Computers unlösbar verbunden ist.

**13.** Computer (102) mit
- einem Sensor (104) zur Bestimmung eines Ortes, an dem ein erstes Computerprogramm ausgeführt wird, wobei der Sensor dazu ausgebildet ist, den Ort dadurch zu bestimmen, dass der Sensor (104) Ortsdaten misst, wobei die Ortsdaten den Ort spezifizieren;
- einer Bestimmungskomponente (114) zur Bestimmung einer Region, in der der Ort liegt;
- einer Bestimmungskomponente (114) zur Bestimmung eines Funktionsumfangs, der für das erste Computerprogramm an dem Ort zulässig ist;
- Mitteln (118) zur Änderung der Konfiguration des ersten Computerprogramms, wobei nach der Änderung der Konfiguration das erste Computerprogramm den bestimmten Funktionsumfang umfasst;
- Mitteln zur Verschlüsselung (110) einer Übertragung der Ortsdaten von dem Sensor (104) zur Bestimmungskomponente (114) .

**14.** Computerprogrammprodukt mit durch einen Prozessor ausführbaren Instruktionen, wobei die Instruktionen einen Computer bei Ausführung zur Durchführung eines Verfahrens nach einem der Ansprüche 1-12 veranlassen.
